# EUROPEAN PATENT APPLICATION

(11) **EP 2 752 282 A1**
(43) Date of publication of application: **09.07.2014**
(21) Application number: 12828552.5
(22) Date of filing: 30.08.2012
(51) Int. Cl.: B29C 33/38, B29C 45/26

(54) **DIE AND METHOD FOR MANUFACTURING DIE**

(30) Priority: 31.08.2011 JP 2011188347
(71) Applicant: Polyplastics Co., Ltd., Tokyo 108-8280 (JP)
(72) Inventor: MIYASHITA, Takayuki, Shizuoka 416-8533 (JP); HIROTA, Shinichi, Shizuoka 416-8533 (JP)
(74) Representative: Maiwald Patentanwalts GmbH
(86) International application number: PCT/JP2012/072040
(87) International publication number: WO 2013/031905

(57) **Abstract**

Provided is a technology for suppressing, in a mold having a heat-insulating layer formed therein, a problem of chipping of the heat-insulating layer and the like even when a penetrating member is inserted through a through-hole provided in the mold. The mold is provided with a mold body having a convex part on an inner wall surface of the mold body, a heat-insulating layer arranged on the inner wall surface, and a through-hole which penetrates the convex part in a thickness direction of the mold body and through which the penetrating member can be inserted. An outer periphery of the through-hole is inside an outer periphery of a top surface of the convex part. A spacing between the outer periphery of the through-hole on the top surface of the convex part and the outer periphery of the top surface of the convex part is preferably 0.5 mm or less.

## Description

### TECHNICAL FIELD

The present invention relates to a mold having a heat-insulating layer formed therein, and a method for manufacturing the mold.

### BACKGROUND ART

A thermoplastic resin has been used in various fields such as electrical components and electronic components used for a car and the like; office equipment; containers for food and drink; and the like since it weighs less than other materials such as metal, and can be easily molded into desired forms by the injection-molding method and the like.

In a case in which a mold is filled with a molten thermoplastic resin as in the injection-molding method to obtain a resin molded article in a desired shape, a pattern and shape to be formed in the resin molded article are formed on a cavity surface of the mold.

In order to improve transferability of the pattern and shape on the cavity surface to the resin molded article, methods have been known such as those in which improvement is made in a thermoplastic resin, those in which a specific additive is added to a thermoplastic resin, and those in which a mold temperature is increased.

In particular, a method in which a mold temperature is increased is effective in that improvement of materials is not required. However, when a mold temperature is increased, more time is required for cooling and solidifying a plasticized thermoplastic resin, which generally decreases the forming efficiency.

In this regard, Patent Literature 1 and others disclose a mold having an inner wall surface coated with a heat-insulating layer having small heat conductivity, i.e., a heat-insulating mold.

In addition to the improvement of transferability as described above, the heat-insulating mold described above in Patent Literature 1 and others is also suitable for a case in which a mold temperature needs to be increased (for example, a case in which moldability or the like is improved).
[Patent Document 1] Japanese Unexamined Patent Application, Publication No. H09-155876

### DISCLOSURE OF THE INVENTION

### Problems to be Solved by the Invention

Meanwhile, in order to easily remove a resin molded article from a mold after molding, an ejector pin is used which is to be inserted through a through-hole provided in the mold such that the pin can move back and forth. When an ejector pin is used for a mold having a heat-insulating layer formed therein, friction between the heat-insulating layer and the ejector pin occurs at the rim of a through-hole in the inside of the mold. This friction causes a problem such as chipping of a heat-insulating layer.

Further, for the purpose of monitoring the conditions of a resin in a mold during molding, sensors such as a thermometer and a pressure gage is placed in a through-hole provided in the mold. In a case where a sensor is installed in a mold having a heat-insulating layer formed therein, friction between the heat-insulating layer and the sensor occurs at the rim of the through-hole when inserting the sensor because a clearance between the through-hole and the sensor is very small. This friction causes a problem such as chipping of a heat-insulating layer.

The present invention has been made in order to solve the above problems. An object of the present invention is to provide a technology for suppressing, in a mold having a heat-insulating layer formed therein, a problem of chipping of the heat-insulating layer and the like even when a penetrating member is inserted through a through-hole provided in the mold.

### Means for Solving the Problems

The present inventors found that in a mold having heat-insulating layer formed therein, a problem of chipping of the heat-insulating layer and the like occurs when a penetrating member is inserted through a through-hole provided in the mold. Accordingly the present inventors have conducted extensive studies to solve the above problem. As a result, the present inventors have found that the above problem can be solved by providing a mold comprising: a mold body having a convex part on an inner wall surface of the mold body, a heat-insulating layer arranged on the inner wall surface, and a through-hole which penetrates the convex part in a thickness direction of the mold body and through which the penetrating member can be inserted, wherein an outer periphery of the through-hole is inside an outer periphery of a top surface of the convex part. Then the present inventors have completed the present invention. More specifically, the present invention provides the following.
(1) A mold having a heat-insulating layer formed on an inner wall surface of the mold, comprising a through-hole extending from the inner wall surface in a thickness direction, wherein, with a penetrating member being inserted through the through-hole, the heat-insulating layer does not make a contact with the penetrating member, and an end surface of the penetrating member at the side of a cavity coincides with a surface of the cavity.
(2) The mold according to (1), comprising: a mold body having a convex part on an inner wall surface of the mold body; a through-hole penetrating the convex part in a thickness direction of the mold body; and a penetrating member inserted through the through-hole, wherein an outer periphery of the through-hole is present inside an outer periphery of a top surface of the convex part.
(3) The mold according to (2), wherein a spacing between the outer periphery of the through-hole on the top surface of the convex part and the outer periphery of the top surface of the convex part is 0.5 mm or less.
(4) The mold according to (2) or (3), wherein a side of the convex part is a sloped surface extending downward from the top surface to the inner wall surface, and the heat-insulating layer is a heat-insulating layer formed by a spraying method.
(5) The mold according to (2) or (3), wherein a side of the convex part comprises a perpendicular surface perpendicularly extending downward from the top surface to the inner wall surface and a sloped surface extending downward to the inner wall surface from a lower end of the perpendicular surface when a line of intersection between the top surface and the perpendicular surface is taken as an upper end of the perpendicular surface, and the heat-insulating layer is a heat-insulating layer formed by a spraying method.
(6) The mold according to (4) or (5), wherein an exterior angle between the top surface of the convex part and the sloped surface is 45° or less.
(7) A method for manufacturing a mold comprising: a heat-insulating layer forming step of forming a heat-insulating layer on an inner wall surface of a mold body having a convex part provided on the inner wall surface; a removal step of removing a portion of the heat-insulating layer or a portion of the heat-insulating layer and a portion of the convex part from a surface of the heat-insulating layer; and a through-hole forming step of forming a through-hole penetrating from a top surface of the convex part in a thickness direction of the mold body, wherein the removal step is a step of removing the portion of the heat-insulating layer or the portion of heat-insulating layer and the portion of the convex part so that an outer periphery of an opening of the through-hole on the top surface is present inside relative to an outer periphery of the top surface.
(8) A method for manufacturing a mold comprising: a second through-hole forming step of forming a through-hole from a top surface of a convex part of a mold body having the convex part, in a height direction of the convex part, the convex part being provided on an inner wall surface of the mold body; a second heat-insulating layer forming step of forming a heat-insulating layer on the inner wall surface, with a mask covering the through-hole and an outer periphery of the through-hole being placed on the top surface; and a removal step of removing the mask after forming the heat-insulating layer; wherein the second through-hole forming step is a step of forming the through-hole so that an outer periphery of an opening of the through-hole on the top surface is present inside relative to an outer periphery of the top surface.

### Effects of the Invention

A mold according to the present invention or a mold manufactured by the manufacturing method according to the present invention can suppress, in a mold having a heat-insulating layer formed therein, a problem of chipping of the heat-insulating layer and the like even when a penetrating member is inserted through a through-hole provided in the mold.

### BRIEF DESCRIPTION OF THE DRAWINGS

FIG. 1 shows schematic views of a mold according to an embodiment: FIG. 1A is a perspective view and FIG. 1B a cross-sectional view at the MM cross section.
FIG. 2 shows perspective views schematically illustrating the inside of a mold body having a through-hole formed therein: FIG. 2B is a cross sectional view of FIG. 2A at the NN cross section.
FIG. 3 shows schematic views illustrating the inside of a mold body in a state in which a heat-insulating layer is formed: FIG. 3A is a perspective view, and FIG. 3B is a cross sectional view at OO cross section.
FIG. 4 shows schematic views illustrating an example of the manufacturing method according to the present invention.
FIG. 5 shows schematic views illustrating the manufacturing method according to a second embodiment.
FIG. 6 shows a schematic view illustrating a mold according to an embodiment different from the embodiment shown in FIG. 1.
FIG. 7 shows a schematic view illustrating a mold according to an embodiment different from the embodiments shown in FIG. 1 and FIG. 6.
FIG. 8 shows an enlarged view illustrating the dimensions of a convex part in the mold according to the embodiment shown in FIG. 7.

### EXPLANATION OF REFERENCE NUMERALS

1, 1A, 1B: Mold
10, 10A, 10B: Mold body
101, 101B: Convex part
11: Through-hole
12: Heat-insulating layer
2: Mask

### PREFERRED MODE FOR CARRYING OUT THE INVENTION

Hereinafter, embodiments of the present invention will be described. It should be understood that the present invention is not limited to the following embodiments.

### First embodiment

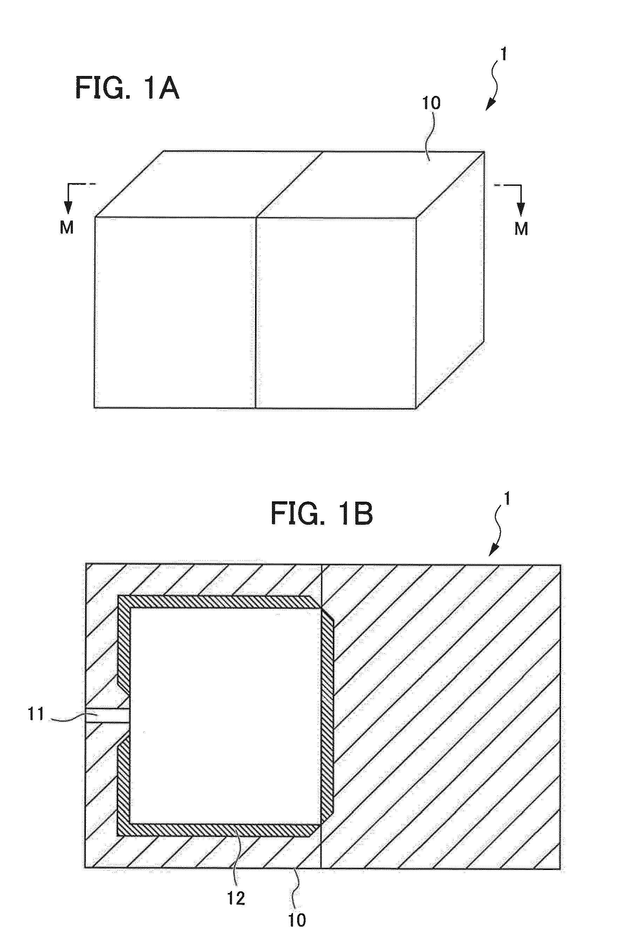

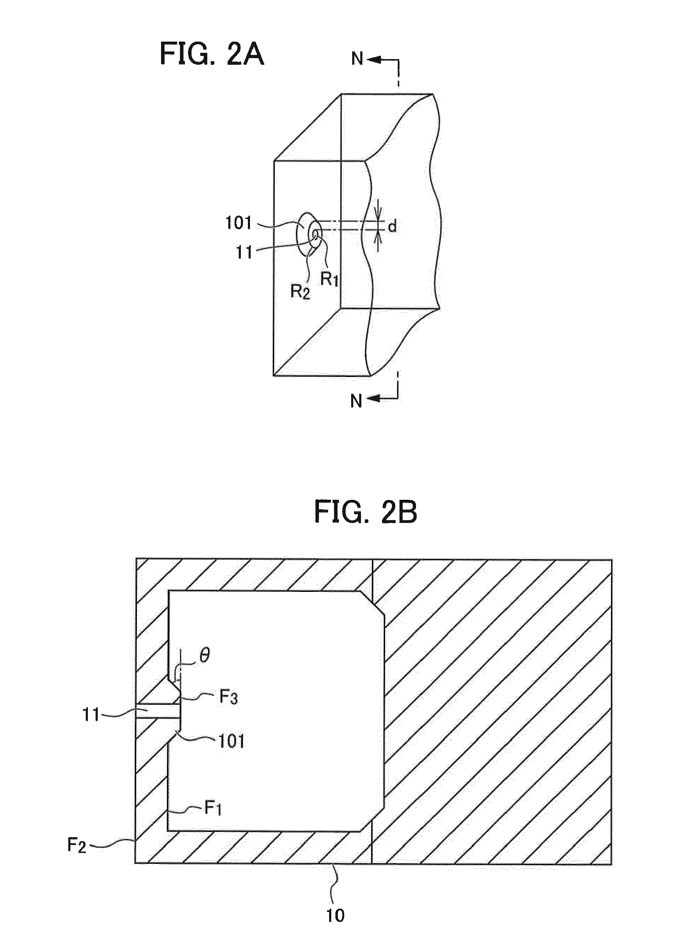

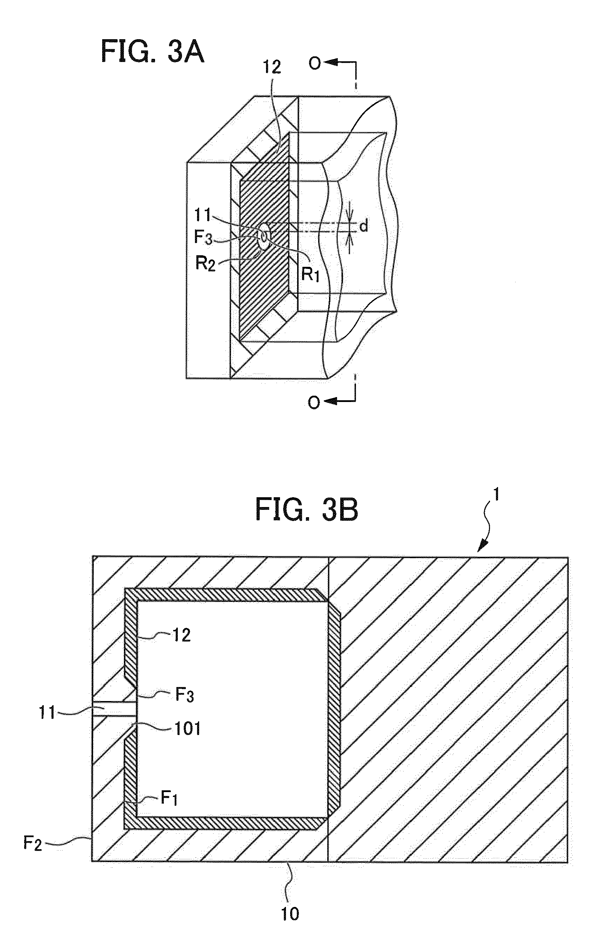

FIG. 1 shows schematic views of a mold according to this embodiment: FIG. 1A is a perspective view and FIG. 1B a cross-sectional view at the MM cross section. FIG. 2 shows a perspective view schematically illustrating the inside of a mold body having a through-hole formed therein: FIG. 2B is a cross sectional view of FIG. 2A at the NN cross section. FIG. 3A shows a perspective view schematically illustrating the inside of a mold body in a state in which a heat-insulating layer is formed: FIG. 3B is a cross sectional view at OO cross section.

As shown in FIG. 1, a mold 1 according to this embodiment comprises a mold body 10, a through-hole 11 and a heat-insulating layer 12. In the mold body 10 which shapes the external form of the mold, provided is the through-hole 11 penetrating a cavity and the outside of the mold 1. Further, the heat-insulating layer 12 is arranged on an inner wall surface of the mold body 10. Note that the mold 1 is a dual-divided mold, but there is no particular limitation on the number of partitions. Note that the cavity refers to the entire space in the inside of the mold to be filled with resin.

As shown in FIG. 2A, the mold body 10 has a convex part 101 provided on an inner wall surface of the mold body 10.

There is a space inside the mold body 10 which serves as a cavity. The mold body 10 has an inner wall surface F₁ (hereinafter may be referred to as the surface F₁) and a surface F₂ which forms the outer surface of the mold 1. As described below, most of the cavity surface forms the surface of the heat-insulating layer 12. When forming the heat-insulating layer 12, a shape of a resin molded article may be formed on the heat-insulating layer 12, but the shape which will be transferred to the resin molded article is preferably pre-formed on the surface F₁. Further, in this embodiment, a mold in which the through-hole 11 is formed in the dual-divided mold 1 has a flange portion extending out from the edge of an inner wall surface of the mold. A portion of a surface of this flange portion forms a portion of a mold parting surface. Further, in a case where a heat-insulating layer described below is formed by the spraying method, on the surface of the flange portion, an angle between the surface to be a portion of the mold parting surface and the surface at the side of the inner wall surface is preferably 45° or more.

Moreover, there is no particular limitation on the shape of the other surface F₂. It may be appropriately selected in view of easiness of mold-clamping and the like.

The convex part 101 extends toward the inside of the mold 1 from the surface F₁. According to this embodiment, the convex part 101 is in a trapezoidal shape, and has a top surface F₃. In addition, according to this embodiment, the exterior angle θ between the side of the trapezoidal convex part 101 and the top surface F₃ is 45° or less. Note that there is no particular limitation on the number, size and the like of the convex parts 101, and they may be adjusted as desired. Further, according to this embodiment, the convex part 101 is located at the side of the inner wall surface of the mold 1, but there is no particular limitation on the position of the convex part 101, and the convex part 101 may be provided at a desired position.

The through-hole 11 is a through-hole penetrating in the thickness direction of the mold body 10. According to this embodiment, the through-hole 11 is formed linearly extending from the top surface F₃ of the convex part 101 in the thickness direction of the mold body 10.

A penetrating member can be inserted through the through-hole 11. Penetrating members can include an ejector pin and sensors such as a thermometer and a pressure gage. The end surface of a penetrating member at the side of the cavity is present within the same surface as the cavity surface when inserted through the through-hole 11. Note that a penetrating member is omitted and not shown in FIGs. 1 to 3 and 6.

The heat-insulating layer 12 is arranged on the surface F₁ as shown in FIG. 3. Whether the heat-insulating layer 12 is arranged on the entire surface F₁ or on a portion of the surface F₁ is not particularly limited, but usually it is preferably arranged on the entire surface F₁ so that the effect from the heat-insulating layer 12 may be uniformly exerted to a resin molded article. Note that the heat-insulating layer 12 may also be formed on the side of the convex part 101 as shown in FIG. 3.

Further, according to the present invention, the heat-insulating layer 12 described below is not formed at an outer periphery R₁ of the through-hole 11. Therefore, the outer periphery of the through-hole 11 is present inside the outer periphery of the top surface F₃. That is, a certain spacing is present between the outer periphery R₁ of the through-hole 11 and the heat-insulating layer 12. According to this embodiment, the heat-insulating layer 12 is not formed on the top surface F₃ of the convex part 101, and the outer periphery R₁, of an opening of the through-hole 11 on the top surface F₃ is present within the top surface F₃ as shown in FIG. 3B, and thereby a certain spacing is provided between the outer periphery R₁ of the through-hole 11 and the heat-insulating layer 12. In order to improve the strength of the convex part 101 so that problems such as chipping of the convex part 101 at the step of forming the through-hole 11 can be suppressed, the spacing d between an outer periphery R₂ of the top surface F₃ and the outer periphery R₁ of the through-hole 11 should be more than 0 mm, and is preferably 0.1 mm or more. Further, as described below with regard to the manufacturing method according to the second embodiment, in a case where a mask covering the through-hole 11 and the outer periphery of the through-hole 11 is arranged on the top surface F₃, and then a heat-insulating layer is formed, the spacing d is preferably at least about 0.2 mm so that the top surface F₃ can serve as a base for stably mounting the mask. On the other hand, when the spacing d is too large, a region which can not be heat-insulated is too large, which means that the effect from the heat-insulating layer may be lost. Therefore, the spacing d is preferably 0.5 mm or less so that a region on which a heat-insulating layer is not formed (a region which can not be heat-insulated) is to be as narrow as possible. In this context, if the outer periphery R₂ of the top surface F₃ and the outer periphery R₁ of the through-hole 11 are perfect circles in which the both centers are located at the same position, the spacing d is constant, but otherwise the spacing d is not constant. In this case, the spacing d is preferably 0.5 mm or less at the position on the outer periphery R₁ of the through-hole 11, the position where the shortest distance to the outer periphery R₂ of the top surface F₃ is the largest.

There is no particular limitation on the thickness of the heat-insulating layer 12, but it is appropriately selected in view of the heat-insulating effect and the like of a material which constitutes the heat-insulating layer 12. Further, the thickness of the heat-insulating layer may not be constant. Moreover, according to this embodiment, the heat-insulating layer 12 forms the cavity surface.

The thermal conductivity required for the heat-insulating layer 12 is particularly preferred to be 2 W/m·K or less although it may differ depending on applications and the like.

There is no particular limitation on the material which constitutes the heat-insulating layer 12 as long as it has low thermal conductivity and thermal resistance good enough not to produce a fault even when contacted with a hot resin composition.

Examples of the material which satisfies the thermal resistance and thermal conductivity required for the heat-insulating layer 12 can include resins having low thermal conductivity and high thermal resistance such as a polyimide resin, and porous ceramics such as porous zirconia. Hereinafter, these materials will be described.

Specific examples of the polyimide resin include pyromellitic acid (PMDA) based polyimide, biphenyltetracarboxylic acid based polyimide, polyamidoimide in which trimellitic acid is used, bismaleimide based resin (bismaleimide/triazine based and the like), benzophenonetetracarboxylic acid based polyimide, acetylene-terminated polyimide, and thermoplastic polyimide. Note that a heat-insulating layer constituted of a polyimide resin is particularly preferred. Preferred materials other than polyimide resins include a tetrafluoroethylene resin and the like. Further, the heat-insulating layer may contain a resin other than a polyimide resin and a tetrafluoroethylene resin, an additive and the like in a range where the effect of the present invention is not compromised.

Zirconia contained in porous zirconia is not particularly limited, and may be any of stabilized zirconia, partially stabilized zirconia and unstabilized zirconia. Stabilized zirconia, which is zirconia in which cubic zirconia is stabilized even at room temperature, is excellent in mechanical properties such as strength and toughness and wear resistance. Partially stabilized zirconia, which refers to a state in which tetragonal zirconia partially remains even at room temperature, undergoes martensitic transformation from the tetragonal system to the monoclinic system, inhibits growth of cracks spread due to tensile stress in particular, and has high rupture toughness. Unstabilized zirconia refers to zirconia which is not stabilized by a stabilizer. At least two selected from stabilized zirconia, partially stabilized zirconia, and unstabilized zirconia may be used in combination.

As a stabilizer contained in stabilized zirconia and partially stabilized zirconia, a conventionally known stabilizer can be employed. Examples thereof include yttria, ceria and magnesia. The amount of the stabilizer used is not particularly limited, and can be appropriately set according to the use, the material to be used, and the like.

Note that porous ceramics other than porous zirconia can also be used, but porous zirconia has higher durability as compared with other porous ceramics. For this reason, when the mold 1 having the heat-insulating layer 12 constituted of porous zirconia formed therein is used, faults such as deformation of the heat-insulating layer 12 do not easily occur. Therefore, more molded articles can be continuously molded, leading to the significantly increased productivity of molded articles.

A raw material to form the heat-insulating layer 12 may further contain conventionally known additives and the like in addition to the above-described zirconia and stabilizer within a range of not hindering the effect of the present invention.

### Method for manufacturing mold

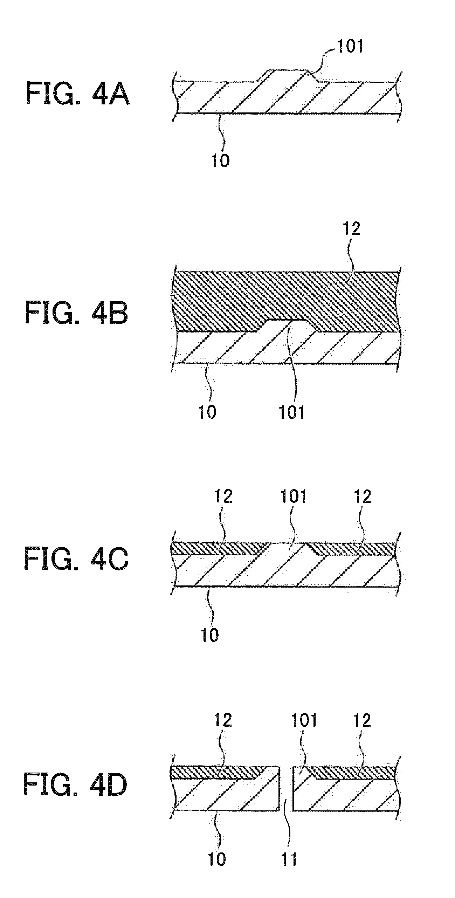

In the present invention, there is no particular limitation on the method for manufacturing the above mold 1, but the mold according to the present invention is preferably manufactured using the manufacturing method according to the present invention. Hereinafter, the method for manufacturing the mold according to the present invention will be described with reference to the manufacturing method according to the present invention as an example. FIG. 4 shows schematic views illustrating an example of the manufacturing method according to the present invention. Note that FIG. 4 shows only the vicinity of the convex part 101.

The manufacturing method according to the present invention comprises a heat-insulating layer forming step, a removal step and a through-hole forming step.

### [Heat-insulating layer forming step]

In the heat-insulating layer forming step, the heat-insulating layer 12 is formed on an inner wall surface of the mold body 10. There is no particular limitation on the method for forming the heat-insulating layer 12. Preferred conditions may be appropriately used depending on a material which constitutes the heat-insulating layer 12 or the like.

The heat-insulating layer forming step according to this embodiment corresponds to a step of transforming a state shown in FIG. 4A into that shown in FIG. 4B. In the heat-insulating layer forming step according to this embodiment, the heat-insulating layer 12 is also formed on a surface of the convex part 101.

For example, in a case where the material which constitutes the heat-insulating layer 12 is a resin having high thermal resistance and low thermal conductivity such as a polyimide resin, the following methods may be used: a method for forming a heat-insulating layer of polyimide film and the like, the method comprising: applying a solution of a polymer precursor capable of forming a polymeric heat-insulating layer such as a polyimide precursor to the surface F₁ and the surface of the convex part 101 (also referred to as "a heat-insulating layer-formed surface" herein), applying heat to evaporate a solvent and further applying heat for polymerization; a method in which a monomer of a thermally stable polymer, for example, pyromellitic acid anhydride and the 4,4-diaminodiphenyl ether is vapor deposited and polymerized; or in the case of a planar mold, a method for forming the heat-insulating layer 12, the method comprising attaching a polymeric heat-insulating film on a heat-insulating layer-formed surface of the mold body 10 using an appropriate adhesion method or a polymeric insulating film in a form of an adhesive tape. In addition, a polyimide film may be formed, and then on that surface, a chromium (Cr) film or a titanium nitride (TiN) film as a metal based hard film may be further formed.

Further, in a case where a material which constitutes the heat-insulating layer 12 is porous ceramics such as porous zirconia, the spraying method is preferably used. By employing the spraying method, the thermal conductivity of porous zirconia and the like is easily adjusted to fall within a desired range. In addition, there is not a problem that the mechanical strength of the heat-insulating layer 12 is considerably decreased due to formation of excessive bubbles in the inner part of porous zirconia and the like. By forming the heat-insulating layer 12 by spraying as described above, the structure of the heat-insulating layer 12 becomes suitable for the use of the present invention.

For example, formation of the heat-insulating layer 12 by spraying can be performed in the following manner. First, a raw material is melted into a liquid. The liquid is accelerated to collide against the heat-insulating layer-formed surface. Lastly, the raw material, which collides against the heat-insulating layer-formed surface and is deposited thereon, is solidified. In this way, a very thin heat-insulating layer 12 is formed on the inner surface of a mold. By further causing a molten raw material to collide onto the very thin heat-insulating layer 12 and to be solidified, the thickness of the heat-insulating layer 12 can be adjusted. For the method for solidifying a raw material, conventionally known cooling means may be used, or the raw material may be merely left standing and thereby solidified. The spraying method is not particularly limited, and a preferred method can be appropriately selected from arc spraying, plasma spraying, flame spraying and the like.

### [Removal step]

The removal step refers to a step of removing a portion of the heat-insulating layer 12 (in some cases, a portion of the heat-insulating layer 12 and a portion of the convex part) from the surface of the heat-insulating layer 12 formed in the heat-insulating layer forming step. The heat-insulating layer removal step corresponds to a step of transforming a state shown in FIG. 4B into that shown in FIG. 4C.

In this step, first, the heat-insulating layer 12 is removed from the surface of the heat-insulating layer 12 in the thickness direction of the heat-insulating layer 12. Continued removal will expose the top surface F₃. In this step, it is sufficient to remove the heat-insulating layer 12 present on the top surface F₃. Then, as the removal step is continued, the convex part 101 is being removed from the top surface F₃ such that it becomes thin in the height direction of the convex part 101 (which is the same direction as the thickness direction of the heat-insulating layer in this embodiment). In the removal step, after the top surface F₃ is reached, how far the removal step is continued in the thickness direction of the heat-insulating layer 12 is determined, for example, depending on the size of the opening of the through-hole 11 and the like. According to this embodiment, the outer periphery R₁ of the opening of the through-hole 11 is present inside the outer periphery R₂ of the top surface F₃. Therefore, in a case where the outer periphery R₁ of the opening of the through-hole 11 may not be surrounded by the outer periphery R₂ of the top surface F₃ before removal, the removal step is performed to an extent that the outer periphery R₁ may be surrounded by the outer periphery R₂.

There is no particular limitation on the method for performing the removal step, but a preferred method is appropriately selected depending on a material which constitutes the heat-insulating layer 12, a material which constitutes the convex part 101 and the like. Examples of the method include grinding with diamond paste.

Note that in the description of this embodiment, an example is described in which the heat-insulating layer 12 and the convex part 101 are removed so that the surface of the heat-insulating layer 12 coincides with the top surface F₃ of the convex part 101. But the removal step may be performed without leveling the height of the heat-insulating layer 12 with that of the convex part 101, or the removal step may be performed so that a portion having a different thickness within the heat-insulating layer 12 may appear.

### [Through-hole forming step]

The through-hole forming step refers to a step of forming the through-hole 11 which penetrates in the thickness direction of the convex part 101 (in the height direction of the convex part 101), and through which a penetrating member can be inserted. Further, the through-hole forming step is a step of transforming a state shown in FIG. 4C into that shown in FIG. 4D.

The through-hole 11 is formed so that it penetrates the convex part 101 in the height direction of the convex part 101. In this step of this embodiment, the through-hole 11 is formed so that, on the top surface F₃, a certain spacing is provided between the outer periphery R₂ of the top surface F₃ and the outer periphery R₁ of the through-hole 11. There is no particular limitation on the specific method for forming the through-hole 11, and any common method such as machining may be used.

After forming the through-hole 11, a penetrating member is inserted through the through-hole 11, thereby completing the mold according to this embodiment.

### Second embodiment according to mold-manufacturing method

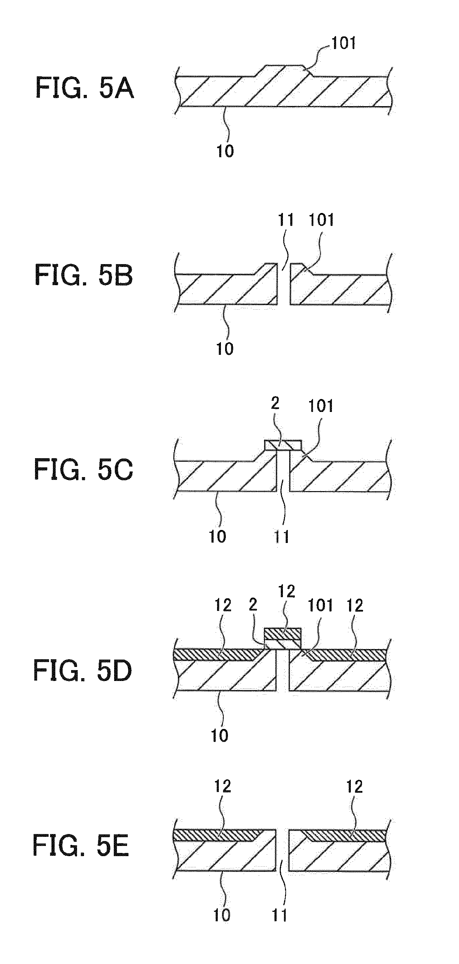

In addition to the mold manufacturing methods described above, the mold according to the present invention can also be manufactured by the following method. FIG. 5 shows schematic views illustrating the manufacturing method according to the second embodiment. The manufacturing method according to the second embodiment will be described with reference to FIG. 5. But descriptions may be appropriately omitted in a case where they are the same as in the first embodiment.

The manufacturing method according to the second embodiment comprises a second through-hole forming step of forming the through-hole 11 from the top surface F₃ of the convex part 101 of the mold body 10 in the height direction of the convex part 101, a second heat-insulating layer forming step of forming a heat-insulating layer on an inner wall surface, with a mask covering the through-hole 11 and the outer periphery of the through-hole 11 being placed on the top surface F₃, and a mask removal step of removing the mask after forming the heat-insulating layer.

The second through-hole forming step is a step of transforming a state shown in FIG. 5A into that shown in FIG. 5B. In the second through-hole forming step, the through-hole 11 is formed from the top surface F₃ of the convex part 101 of the mold body 10 in the height direction of the convex part 101. As in the through-hole forming step according to the first embodiment, the through-hole 11 is formed so that a certain spacing is provided between the outer periphery R₂ of the top surface F₃ and the outer periphery R₁ of the through-hole 11.

The second heat-insulating layer forming step is a step of transforming a state shown in FIG. 5B into that shown in FIG. 5C, and then into that shown in FIG. 5D. In this step, first, a mask 2 is placed on the through-hole 11. The mask 2 will prevent a heat-insulating layer from being formed in the inside of the through-hole 11 and at the outer periphery R₁ of the opening of the through-hole 11. In this context, as long as the through-hole 11 and the outer periphery R₁ of the through-hole 11 are covered by the mask 2, any length of the spacing at the top surface F₃ between the outer periphery of the mask 2 and the outer periphery R₁ of the through-hole 11 may be appropriately selected depending on applications and the like. For example, the length may be selected so that the outer periphery of the mask 2 coincides with the outer periphery R₂ of the top surface F₃. Note that there is no particular limitation on the mask 2, and any conventionally known mask may be used.

Subsequently, the heat-insulating layer 12 is formed on an inner wall surface of the mold body 10 including the surface of the mask 2. A method for forming the heat-insulating layer 12 is similar to that in the manufacturing method according to the first embodiment as described above.

The mask removal step is a step of transforming a state shown in FIG. 5D into that shown in FIG. 5E, that is, a step of removing the mask 2 from the mold having the heat-insulating layer 12 formed therein. The mask 2 is removed, and a penetrating member is inserted through the through-hole 11 to give a mold according to this embodiment.

### Effects of the present invention

According to the mold according to the present embodiment and the method for manufacturing the mold, the following effects can be achieved.

The convex part 101 and the heat-insulating layer 12 are present on the surface F₁, and the through-hole 11 is provided in the convex part 101. By forming the through-hole 11 in the convex part 101, a state where the heat-insulating layer 12 is not formed at the outer periphery R₁ of the through-hole 11 can be easily obtained. If the heat-insulating layer 12 is not formed at the outer periphery R₁ of the through-hole 11, problems such as abrasion of the heat-insulating layer 12 by a penetrating member will not arise even when the penetrating member is inserted through the through-hole 11.

According to the mold of the present embodiment, the spacing between the outer periphery R₁ of the through-hole 11 at the top surface F₃ of the convex part 101 and the outer periphery R₂ of the top surface F₃ of the convex part 101 is 0.5 mm or less. In a case where the spacing is about 0.5 mm or less, adjustment of the spacing is not difficult, and even in a mold for manufacturing a small molded article, a problem caused by the heat-insulating layer 12 not being formed on a portion of the top surface F₃ of the convex part 101 will not easily arise.

In the mold 1 according to the present embodiment, the side of the convex part 101 is a sloped surface extending downward from the top surface F₃ to an inner wall surface of the mold. By forming the aforementioned sloped surface, even in a case where the heat-insulating layer 12 is formed by the spraying method, problems such as a non-uniform thickness of the heat-insulating layer 12 can be suppressed. In view of easiness of forming the heat-insulating layer 12, the exterior angle θ between the top surface F₃ of the convex part 101 and the sloped surface is preferably 45° or less.

According to the method for manufacturing the mold 1 according to the embodiment, in the step of removing a portion of the heat-insulating layer 12 or a portion of the heat-insulating layer 12 and a portion of the convex part 101 from the surface of the heat-insulating layer 12 in the thickness direction of the heat-insulating layer 12, the spacing between the outer periphery R₁ and the outer periphery R₂ can be adjusted. Therefore, a state in which the heat-insulating layer 12 is not formed at the outer periphery R₁ of the through-hole 11 can be easily formed.

The preferred embodiments of the mold according to the present invention are described above, but the present invention is not limited to the aforementioned embodiments, but can be performed in various forms.

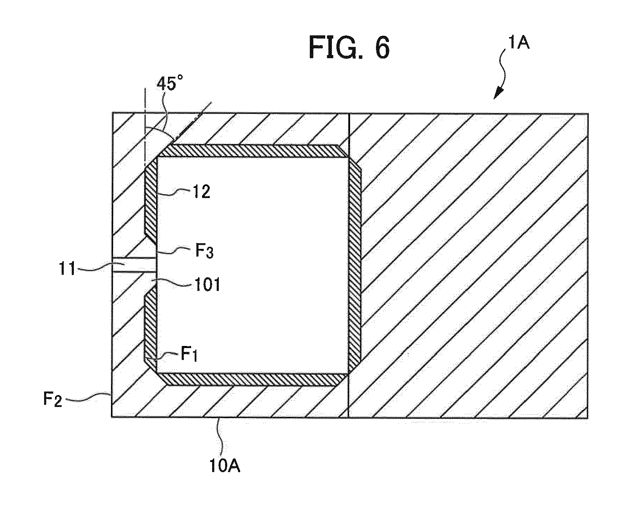

Further, the bottom of the mold body 10 in the aforementioned embodiments has an angle of 90° as shown in FIG. 2B, but it may be gently sloped as in a mold 1A shown in FIG. 6. As shown in FIG. 6, an angle at the bottom of a mold body 10A is preferably adjusted to 45° or less, because this allows the heat-insulating layer 12 to be easily formed by the spraying method.

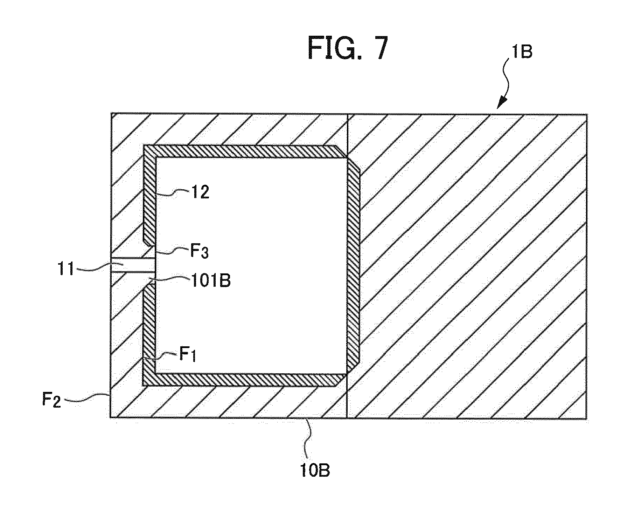

Further, preferred embodiments of the mold according to the present invention also include an embodiment shown in FIG. 7. FIG. 7 shows a schematic view illustrating a mold according to an embodiment different from the embodiments shown in FIG. 1 and FIG. 6.

As shown in FIG. 7, a mold 1B according to this embodiment comprises a mold body 10B, the through-hole 11 and the heat-insulating layer 12. The mold 1B according to this embodiment is similar to the mold 1 except that the mold body 10B has a convex part 101B instead of the convex part 101. Accordingly, differences in the molds 1B of this embodiment from the mold 1 will be described below.

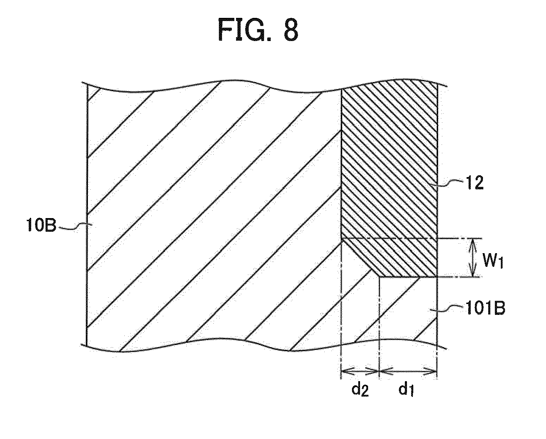

The convex part 101B extends toward the inside of the mold 1B from the surface F₁. According to this embodiment, the convex part 101B has the top surface F₃, and the side of the convex part 101B comprises a perpendicular surface perpendicularly extending downward from the top surface F₃ to the surface F₁, and a sloped surface extending downward to the surface F₁ from a lower end of the perpendicular surface when the line of intersection between the top surface F₃ and the perpendicular surface is taken as an upper end of the perpendicular surface. The exterior angle θ between the sloped surface which constitutes the side of the convex part 101B and the top surface F₃ is 45° or less. More specifically, it is as shown in FIG. 8. FIG. 8 shows an enlarged view illustrating the dimension of the convex part in the mold according to the embodiment shown in FIG. 7. In FIG. 8, the height d₁ of the perpendicular surface of the convex part 101B, the projected length d₂ in the height direction of the sloped surface of the convex part 101B, and the projected length w₁ in the direction of the surface F₁ of the sloped surface of the convex part 101B preferably satisfy d₂≤W₁ and preferably further satisfy d₁/d₂≥1 in a case where the heat-insulating layer 12 is formed by the spraying method because the formation becomes easy. Note that there is no particular limitation on the number, size and the like of the convex parts 101B, and they may be adjusted as desired. Further, in this embodiment, the convex part 101B is located in the side of an inner wall surface of the mold 1B, but there is no particular limitation on the position of the convex part 101B, and the convex part 101B may be provided at a desired position.

In the present invention, there is no particular limitation on the method for manufacturing the mold 1B, but the mold 1B can be manufactured by substituting the convex part 101B for the convex part 101 in the method for manufacturing the mold 1 as described in FIG. 4 or FIG.5.

According to the mold 1B of this embodiment and the method for manufacturing the mold 1B, the following effects can be achieved.

In the mold 1B, the side of the convex part 101B not only has a sloped surface but also has a perpendicular surface. Therefore, a portion in which a thickness of the heat-insulating layer 12 is thin becomes small as compared with the case of the mold 1. Therefore, in the mold 1B, a higher heat-insulating effect can be obtained near the convex part 101B.

In a case where the mold 1B is manufactured according to FIG. 4, in the step of removing a portion of the heat-insulating layer 12 from the surface of the heat-insulating layer 12 in the thickness direction of the heat-insulating layer 12, even when the removal is further continued after the top surface F₃ is reached, the size of the outer periphery R₂ of the top surface F₃ can be kept constant for a while since the side of the convex part 101B has a perpendicular surface. Therefore, even if the heat-insulating layer 12 is removed too much, there is no risk of immediate change in the width and area of a region in which the heat-insulating layer 12 is formed. Further, at this time, the spacing d between the outer periphery R₂ of the top surface F₃ and the outer periphery R₁ of the through-hole 11 can also be kept constant. Therefore, the spacing d can be selected at the time of designing a mold, and even if the heat-insulating layer 12 is removed too much, there is no risk of expanding a region in which the heat-insulating layer is not formed (a region which can not be heat-insulated). Further, even if a penetrating member is allowed to penetrate through the through-hole 11, problems such as abrasion of the heat-insulating layer 12 by the penetrating member will not arise.

Note that other effects are similar to those from the mold 1 and the method for manufacturing the mold 1.

Further, the mold body 10 at the side in which the through-hole 11 is not formed in the dual-divided mold 1 as shown in FIG. 1B or FIG. 3B, the mold body 10A at the side in which the through-hole 11 is not formed in the dual-divided mold 1A as shown in FIG. 6, and the mold body 10B at the side in which the through-hole 11 is not formed in the dual-divided mold 1B as shown in FIG. 7 have a recessed portion for arranging the heat-insulating layer 12 on a mold parting surface. This recessed portion is a space which is defined by a sloped surface extending downward from the mold parting surface to a bottom surface of the recessed portion, a bottom surface surrounded by the lower end of the sloped surface when the line of intersection between the mold parting surface and the sloped surface is taken as the upper end of the sloped surface and an extended surface of the mold parting surface. Between the sloped surface and the extended surface of the mold parting surface, there may be a perpendicular surface extending from the mold parting surface to the bottom surface in the perpendicular direction to the mold parting surface. By the presence of the perpendicular surface as described above, a portion in which a thickness of the heat-insulating layer 12 is thin becomes small, and higher heat-insulating effects can be obtained as compared with a case in which the perpendicular surface is not present.

A mold in which the through-hole 11 is not formed can be manufactured according to the manufacturing method as shown in FIG. 4. That is, a method can be used comprising: forming the heat-insulating layer 12 on an inner wall surface of the aforementioned mold; and then removing a portion of the heat-insulating layer 12 until a mold parting surface appears. In this context, in a case where the perpendicular surface is present between the sloped surface and the extended surface of the mold parting surface, even if the heat-insulating layer 12 is removed too much, there is no risk of immediate change in the width and area of a region in which the heat-insulating layer 12 is formed. Further, the exterior angle between the sloped surface and the mold parting surface is preferably 45° or less in a case where the heat-insulating layer 12 is formed by the spraying method because the formation becomes easy.

## Claims

1. A mold having a heat-insulating layer formed on an inner wall surface of the mold,
comprising a through-hole extending from the inner wall surface in a thickness direction, wherein, with a penetrating member being inserted through the through-hole, the heat-insulating layer does not make a contact with the penetrating member, and an end surface of the penetrating member at the side of a cavity coincides with a surface of the cavity.

2. The mold according to claim 1, comprising:
a mold body having a convex part on an inner wall surface of the mold body;
a through-hole penetrating the convex part in a thickness direction of the mold body; and
a penetrating member inserted through the through-hole,
wherein an outer periphery of the through-hole is present inside an outer periphery of a top surface of the convex part.

3. The mold according to claim 2, wherein a spacing between the outer periphery of the through-hole on the top surface of the convex part and the outer periphery of the top surface of the convex part is 0.5 mm or less.

4. The mold according to claim 2 or 3, wherein a side of the convex part is a sloped surface extending downward from the top surface to the inner wall surface, and the heat-insulating layer is a heat-insulating layer formed by a spraying method.

5. The mold according to claim 2 or 3, wherein a side of the convex part comprises a perpendicular surface perpendicularly extending downward from the top surface to the inner wall surface and a sloped surface extending downward to the inner wall surface from a lower end of the perpendicular surface when a line of intersection between the top surface and the perpendicular surface is taken as an upper end of the perpendicular surface, and the heat-insulating layer is a heat-insulating layer formed by a spraying method.

6. The mold according to claim 4 or 5, wherein an exterior angle between the top surface of the convex part and the sloped surface is 45° or less.

7. A method for manufacturing a mold comprising:
a heat-insulating layer forming step of forming a heat-insulating layer on an inner wall surface of a mold body having a convex part provided on the inner wall surface;
a removal step of removing a portion of the heat-insulating layer or a portion of the heat-insulating layer and a portion of the convex part from a surface of the heat-insulating layer; and
a through-hole forming step of forming a through-hole penetrating from a top surface of the convex part in a thickness direction of the mold body,
wherein the removal step is a step of removing the portion of the heat-insulating layer or the portion of heat-insulating layer and the portion of the convex part so that an outer periphery of an opening of the through-hole on the top surface is present inside relative to an outer periphery of the top surface.

8. A method for manufacturing a mold comprising:
a second through-hole forming step of forming a through-hole from a top surface of a convex part of a mold body having the convex part, in a height direction of the convex part, the convex part being provided on an inner wall surface of the mold body;
a second heat-insulating layer forming step of forming a heat-insulating layer on the inner wall surface, with a mask covering the through-hole and an outer periphery of the through-hole being placed on the top surface; and
a removal step of removing the mask after forming the heat-insulating layer;
wherein the second through-hole forming step is a step of forming the through-hole so that an outer periphery of an opening of the through-hole on the top surface is present inside relative to an outer periphery of the top surface.
